# EUROPEAN PATENT APPLICATION

(11) **EP 4 776 595 A1**
(43) Date of publication of application: **15.07.2026**
(21) Application number: 24876006.8
(22) Date of filing: 13.05.2024
(51) Int. Cl.: H04L 49/9057, G06F 12/0871

(54) **DATA TRANSMISSION METHOD AND APPARATUS, AND RELATED DEVICE**

(30) Priority: 10.10.2023 CN 202311315139
(71) Applicant: HUAWEI TECHNOLOGIES CO., LTD., Shenzhen, Guangdong 518129 (CN)
(72) Inventor: WANG, Cong, Shenzhen, Guangdong 518129 (CN); DONG, Yingying, Shenzhen, Guangdong 518129 (CN); HUANG, Jinan, Shenzhen, Guangdong 518129 (CN); HU, Zhongfeng, Shenzhen, Guangdong 518129 (CN); XU, Anmin, Shenzhen, Guangdong 518129 (CN)
(74) Representative: Pfenning, Meinig & Partner mbB
(86) International application number: PCT/CN2024/092832
(87) International publication number: WO 2025/077179

(57) **Abstract**

This application discloses a data transmission method. The method is applied to a sending device in a first data center and a receiving device in a second data center. The sending device obtains data transmission configuration information. The data transmission configuration information includes a network address of the receiving device and address information of to-be-transmitted data. The sending device reads the to-be-transmitted data from a data disk based on the address information, and sends a first data packet to the receiving device based on the network address of the receiving device. The receiving device obtains the first data packet, and stores first data included in the first data packet in a data disk of the receiving device. In this way, the sending device reads the to-be-transmitted data from the data disk, so that an underlying data storage mode can be shielded, a quantity of times that the to-be-transmitted data is read from the data disk can be reduced, time overheads of data reading can be reduced, and efficiency of data transmission between data centers can be improved. In addition, this application further provides a corresponding apparatus and a related device.

## Description

This application claims priority to Chinese Patent Application No. 202311315139.0, filed with the China National Intellectual Property Administration on October 10, 2023 and entitled "DATA TRANSMISSION METHOD AND APPARATUS, AND RELATED DEVICE", which is incorporated herein by reference in its entirety.

### TECHNICAL FIELD

This application relates to the field of communication technologies, and in particular, to a data transmission method and apparatus, and a related device.

### BACKGROUND

Data transmission between geographically distributed data centers is needed to fully mine data and efficiently use compute resources in the data centers.

Data transmission between the data centers can be performed through network transmission paths constructed between the data centers. Currently, a file-based data transmission method is used between the data centers. A sending device in a data center reads file data by using a file system. The sending device performs data encryption on the file data, and splits or aggregates the file data based on an amount of the file data, to generate a data packet. The sending device sends the data packet to a receiving device in another data center through a transmission path. In the file-based data transmission mode, data transmission efficiency is low, and it is difficult to satisfy a data transmission requirement between the data centers.

### SUMMARY

In view of this, this application provides a data transmission method and apparatus, and a related device, to improve efficiency of data transmission between data centers.

According to a first aspect, this application provides a data transmission method. The method is applied to a sending device in a first data center. The sending device obtains data transmission configuration information. The data transmission configuration information includes a network address of a receiving device and address information of to-be-transmitted data. The to-be-transmitted data is data that needs to be transmitted by the first data center. The address information of the to-be-transmitted data indicates storage address information of the to-be-transmitted data in a data disk. The sending device reads the to-be-transmitted data from the data disk of the sending device based on the address information, and sends a first data packet to the receiving device in a second data center based on the network address of the receiving device. The first data packet is obtained by the sending device by encapsulating the to-be-transmitted data. The sending device and the receiving device are, for example, data port devices. The sending device uses a manner of reading data from a data disk. In comparison with a manner of reading data from a file, a data reading path is shortened, a quantity of addressing operations needed for reading the data is reduced, data reading time is reduced, and efficiency of reading the to-be-transmitted data is improved. In addition, in the manner of reading data from a data disk, only the to-be-transmitted data stored in the data disk is concerned, and an underlying data storage mode is shielded. The to-be-transmitted data read by the sending device does not have high-level semantics, and is difficult to be parsed based on the upper-layer semantics, thereby ensuring data transmission security.

In some possible implementations, the sending device transmits the first data packet to the receiving device by using an unreliable transmission protocol. In this way, a rate of data transmission between data centers is improved, and overheads for data transmission are reduced.

In some possible implementations, the sending device needs to transmit a large amount of to-be-transmitted data to the receiving device. The sending device obtains a plurality of first data packets by encapsulating the to-be-transmitted data. A payload of the first data packet includes first data in the to-be-transmitted data. A packet header of the first data packet includes an identifier of a data disk that stores the first data, and an offset of the first data in the data disk that stores the first data. Information included in the packet header of the first data packet is used for determining a storage location of the first data in the data disk of the sending device. In this way, the receiving device can determine, in the data disk of the sending device, a storage location of first data included in first data packet lost in a data transmission process, to implement retransmission of lost data.

In some possible implementations, after completing transmission of the to-be-transmitted data once, the receiving device determines whether all the to-be-transmitted data is successfully received. When a part of the to-be-transmitted data is lost, the sending device further obtains lost data information sent by the receiving device. The lost data information includes an identifier of the data disk that is of the sending device and that stores the lost data, and an offset of the lost data in the data disk that stores the lost data. The sending device can re-read the lost data from the data disk of the sending device based on the lost data information, and encapsulate the lost data to obtain a second data packet. The sending device sends the second data packet to the receiving device, to implement retransmission of the lost data, and ensure that the receiving device can obtain all the to-be-transmitted data.

In some possible implementations, the sending device includes a data processing unit DPU. The sending device reads the to-be-transmitted data from the data disk of the sending device based on the address information via the data processing unit DPU of the sending device. The DPU directly reads, through a bus, the to-be-transmitted data stored in the data disk, so that a data read/write path can be shortened, data read/write efficiency can be improved, and a data transmission rate between data centers can be improved. In addition, the to-be-transmitted data is read via the DPU, and the to-be-transmitted data does not need to be processed by the CPU, thereby saving CPU resources, and effectively mitigating a problem that efficiency of data transmission between the data centers is low due to limited CPU resources of the sending device.

In some possible implementations, the sending device and the receiving device are connected through a leased line. The sending device sends a data packet to the receiving device through the leased line. The leased line can implement high-speed, secure, and reliable data transmission.

In some possible implementations, the data transmission configuration information obtained by the sending device further includes data transmission metadata. The data transmission metadata is used for describing a data transmission requirement. Before sending the first data packet to the receiving device, the sending device first establishes a connection to the receiving device based on the network address of the receiving device, and negotiates with the receiving device. The sending device sends the data transmission metadata to the receiving device, so that the receiving device determines, based on the data transmission metadata, whether the receiving device satisfies the data transmission requirement. The sending device obtains a negotiation result fed back by the receiving device. The negotiation result indicates that the receiving device satisfies the data transmission requirement, or indicates a transmission parameter supported by the receiving device. The sending device determines, based on the negotiation result, a transmission parameter for sending data, so that a probability of a data transmission failure can be reduced.

In some possible implementations, the transmission parameter includes a maximum transmission unit MTU. The sending device reads a data block from the data disk of the sending device based on the address information. A size of the data block is determined based on the MTU. The sending device directly encapsulates the read data block to obtain the first data packet. In this way, there is no need to split or aggregate the read to-be-transmitted data, thereby facilitating encapsulation, improving an encapsulation rate, and further improving data transmission efficiency.

In some possible implementations, the storage address information includes an identifier of the data disk that is of the sending device and that stores the to-be-transmitted data, and a start address and a length of the to-be-transmitted data in the data disk.

In some possible implementations, the to-be-transmitted data is separately stored in a plurality of data disks of the sending device. The address information of the to-be-transmitted data includes an identifier of each data disk included in the plurality of data disks, and a start address and a length of the to-be-transmitted data stored in each data disk. The sending device separately reads the to-be-transmitted data from the plurality of data disks based on the address information of the to-be-transmitted data.

In some possible implementations, the sending device obtains the to-be-transmitted data from another device, and stores the to-be-transmitted data in the data disk of the sending device. The another deviceis, for example, a storage device included in the first data center and one or more sending devices included in another data center other than the first data center. The sending device summarizes the to-be-transmitted data from the another device, to facilitate sending the to-be-transmitted data together.

In some possible implementations, if the sending device determines that transmission of the to-be-transmitted data ends, the sending device deletes the to-be-transmitted data stored in the data disk of the sending device, to allocate a storage resource to a subsequent data transmission service.

In some possible implementations, the sending device further has a capability of maintaining a path between the sending device and the receiving device. The sending device obtains device configuration information. The device configuration information includes a network address of the sending device, a network address of a receiving device, and a network address of a network device included on a path between the sending device and the receiving device. The sending device maintains the path between the sending device and the receiving device based on the device configuration information. In this way, the sending device can manage a path, to determine an available path.

In an example, the sending device separately establishes a connection to the receiving device and the network device based on the device configuration information, and obtains device status information of the receiving device and device status information of the network device. The sending device determines, based on the device status information of the receiving device and the device status information of the network device, whether the path between the sending device and the receiving device is available, to maintain a status of the path between the sending device and the receiving device, to determine an unavailable path in a timely manner, and to select an available path for data transmission, thereby improving a probability of a data transmission success.

In some possible implementations, the data transmission configuration information further includes a data transmission trigger condition. The data transmission trigger condition is a condition for triggering the sending device to send the first data packet. In response to satisfying the data transmission trigger condition, the sending device sends the first data packet to the receiving device based on the network address of the receiving device. A user can configure the data transmission trigger condition to implement flexible data transmission between the data centers.

In some possible implementations, there are one or more data transmission paths between the sending device and the receiving device. The sending device can send the first data packet to the receiving device through a plurality of data transmission paths, thereby further reducing data transmission time and improving data transmission efficiency.

According to a second aspect, this application provides a data transmission method. The method is applied to a receiving device in a second data center. The receiving device obtains first data packet sent by a sending device. A payload of the first data packet includes first data in to-be-transmitted data. A packet header of the first data packet includes an identifier of a data disk that is of a sending device and that stores the first data, and an offset of the first data. The receiving device can determine, based on the packet header of the first data packet, a storage location of the first data in the data disk of the sending device, to determine a storage location of lost data in the data disk of the sending device, thereby implementing subsequent retransmission of the lost data. The receiving device stores the first data included in the first data packet in a data disk of the receiving device.

In some possible implementations, the receiving device stores the first data in a storage space indicated by the offset of the first data in the data disk of the receiving device.

In some possible implementations, the receiving device determines lost data information based on the to-be-transmitted data stored in the data disk of the receiving device. The lost data information includes an identifier of the data disk that is of the sending device and that stores the lost data, and an offset of the lost data. The lost data information is used for determining the storage location of the lost data in the data disk of the sending device. The receiving device sends the lost data information to the sending device, so that the sending device retransmits the lost data based on the lost data information, to ensure that the receiving device can obtain the complete to-be-transmitted data.

In some possible implementations, the receiving device maintains a bitmap. Each data bit included in the bitmap corresponds to each first data packet. A value of the data bit indicates whether the first data packet corresponding to the data bit is received. The receiving device determines a lost first data packet based on the bitmap, and determines the lost data information based on the lost first data packet.

In some possible implementations, the receiving device further negotiates with the sending device. The receiving device obtains data transmission metadata sent by the sending device. The data transmission metadata is used for describing a data transmission requirement. The receiving device determines, based on the data transmission metadata, whether the receiving device satisfies the data transmission requirement. The receiving device sends a negotiation result to the sending device. The negotiation result indicates that the receiving device satisfies the data transmission requirement, or indicates a transmission parameter supported by the receiving device. The sending device determines, based on the negotiation result, a transmission parameter for sending data, and transmits a data packet based on the transmission parameter, so that a probability of a data transmission failure can be reduced.

In some possible implementations, after determining that current transmission of the to-be-transmitted data ends, the receiving device sends the to-be-transmitted data to a storage device included in the second data center, to process the data based on the storage device. The receiving device deletes the to-be-transmitted data stored in the data disk of the receiving device, to allocate a storage resource to a subsequent data transmission service.

According to a third aspect, this application provides a data transmission apparatus. The apparatus is used in a sending device in a first data center, and the apparatus includes:
an obtaining module, configured to obtain data transmission configuration information, where the data transmission configuration information includes a network address of a receiving device and address information of to-be-transmitted data, the address information indicates storage address information of the to-be-transmitted data in a data disk, the data disk is a data disk of the sending device, the to-be-transmitted data is data that needs to be transmitted by the first data center, and the receiving device belongs to a second data center;
a reading module, configured to read the to-be-transmitted data from the data disk of the sending device based on the address information; and
a sending module, configured to send a first data packet to the receiving device based on the network address of the receiving device, where the first data packet is obtained by encapsulating the to-be-transmitted data.

In some possible implementations, the sending device transmits the first data packet to the receiving device by using an unreliable transmission protocol.

In some possible implementations, a payload of the first data packet includes first data in the to-be-transmitted data, and a packet header of the first data packet includes an identifier of a data disk that stores the first data, and an offset of the first data in the data disk that stores the first data.

In some possible implementations, the obtaining module is further configured to obtain lost data information sent by the receiving device, where the lost data information includes an identifier of a data disk that stores lost data and an offset of the lost data in the data disk that stores the lost data.

The sending module is further configured to send a second data packet to the receiving device, where a payload of the second data packet includes the lost data read from the data disk of the sending device based on the lost data information.

In some possible implementations, the reading module is specifically configured to read the to-be-transmitted data from the data disk of the sending device based on the address information via a data processing unit DPU of the sending device.

In some possible implementations, the sending module is specifically configured to send the first data packet to the receiving device based on the network address of the receiving device through a leased line between the sending device and the receiving device.

In some possible implementations, the data transmission configuration information further includes data transmission metadata, where the data transmission metadata is used for describing a data transmission requirement. Before sending the first data packet to the receiving device based on the network address of the receiving device, the sending module is further configured to send the data transmission metadata to the receiving device based on the network address of the receiving device.

The receiving module is further configured to: obtain a negotiation result of the receiving device, and determine, based on the negotiation result, a transmission parameter for sending a data packet.

In some possible implementations, the transmission parameter of the data packet includes a maximum transmission unit MTU, the reading module is specifically configured to read a data block from the data disk of the sending device based on the address information, the data block includes the first data, a size of the data block is determined based on the MTU, and the first data packet is obtained by encapsulating the data block including the first data.

In some possible implementations, the storage address information includes an identifier of the data disk that is of the sending device and that stores the to-be-transmitted data, and a start address and a length of the to-be-transmitted data in the data disk.

In some possible implementations, the to-be-transmitted data is separately stored in a plurality of data disks of the sending device, and the address information of the to-be-transmitted data includes an identifier of each data disk included in the plurality of data disks, and a start address and a length of to-be-transmitted data stored in each data disk.

In some possible implementations, the obtaining module is further configured to obtain the to-be-transmitted data, where the to-be-transmitted data is sent by a storage device included in the first data center and by one or more sending devices included in another data center other than the first data center.

The apparatus further includes:
a storage module, further configured to store the to-be-transmitted data in the data disk of the sending device.

In some possible implementations, the apparatus further includes:
a processing module, configured to: if it is determined that transmission of the to-be-transmitted data ends, delete the to-be-transmitted data stored in the data disk.

In some possible implementations, the obtaining module is configured to obtain device configuration information, where the device configuration information includes a network address of the sending device, the network address of the receiving device, and a network address of a network device included on a path between the sending device and the receiving device.

The apparatus further includes:
a management module, configured to maintain the path between the sending device and the receiving device based on the device configuration information.

In some possible implementations, the management module is specifically configured to: separately establish a connection to the receiving device and the network device based on the device configuration information; obtain device status information of the receiving device and device status information of the network device; and determine, based on the device status information of the receiving device and the device status information of the network device, whether the path between the sending device and the receiving device is available.

In some possible implementations, the data transmission configuration information further includes a data transmission trigger condition; and
the sending module is specifically configured to, in response to satisfying the data transmission trigger condition, send the first data packet to the receiving device based on the network address of the receiving device.

In some possible implementations, the data transmission configuration information further includes a network address of a forwarding device included in the data transmission path, the sending module is specifically configured to send the first data packet to the forwarding device based on the network address of the forwarding device, and the forwarding device is configured to send the first data packet to the receiving device based on the network address of the receiving device.

In some possible implementations, there are one or more data transmission paths between the sending device and the receiving device.

According to a fourth aspect, this application provides a data transmission apparatus. The apparatus is used in a receiving device in a second data center, and the apparatus includes:
an obtaining module, configured to obtain a first data packet sent by a sending device, where a payload of the first data packet includes first data in to-be-transmitted data, and a packet header of the first data packet includes an identifier of a data disk that stores the first data, and an offset of the first data; and
a storage module, configured to store the first data included in the first data packet in a data disk of the receiving device.

In some possible implementations, the storage module is specifically configured to store the first data in a storage space indicated by the offset of the first data in the data disk of the receiving device.

In some possible implementations, the apparatus further includes:
a processing module, configured to determine lost data information based on the to-be-transmitted data stored in the data disk of the receiving device, where the lost data information includes an identifier of a data disk that is of the sending device and that stores lost data, and an offset of the lost data; and
a sending module, configured to send the lost data information to the sending device.

In some possible implementations, the processing module is specifically configured to: determine a lost first data packet based on a bitmap, where each data bit included in the bitmap corresponds to each first data packet, and a value of the data bit indicates whether the first data packet corresponding to the data bit is received; and determine the lost data information based on the lost first data packet.

In some possible implementations, the obtaining module is further configured to obtain data transmission metadata sent by the sending device, where the data transmission metadata is used for describing a data transmission requirement.

The apparatus further includes:
a sending module, configured to send a negotiation result to the sending device, where the negotiation result indicates that the receiving device satisfies the data transmission requirement.

In some possible implementations, the apparatus further includes:
a sending module, configured to: send the to-be-transmitted data to a storage device included in the second data center, and delete the to-be-transmitted data stored in the data disk of the receiving device.

According to a fifth aspect, this application provides a system. The system includes a sending device in a first data center and a receiving device in a second data center. The sending device is configured to perform the method according to any one of the first aspect and the possible implementations of the first aspect, and the receiving device is configured to perform the method according to any one of the second aspect and the possible implementations of the second aspect.

According to a sixth aspect, this application provides a computer-readable storage medium. The computer-readable storage medium stores instructions, and when the instructions are run on a compute device, the compute device is caused to perform the method according to any one of the first aspect and the possible implementations of the first aspect, or perform the method according to any one of the second aspect and the possible implementations of the second aspect.

According to a seventh aspect, this application provides a computer program product including instructions. When the computer program product runs on at least one compute device, the at least one compute device is caused to perform the method according to any one of the first aspect and the possible implementations of the first aspect, or perform the method according to any one of the second aspect and the possible implementations of the second aspect.

Based on the implementations provided in the foregoing aspects, the implementations in this application may be further combined to provide more implementations.

### BRIEF DESCRIPTION OF DRAWINGS

FIG. 1 shows a network architecture of a data transmission method according to an embodiment of this application;
FIG. 2 is a diagram of an application scenario according to an embodiment of this application;
FIG. 3 shows a network architecture of a data transmission method according to an embodiment of this application;
FIG. 4 is a schematic flowchart of a data transmission method according to an embodiment of this application;
FIG. 5 is a diagram of reading data from a data disk based on a DPU according to an embodiment of this application;
FIG. 6 is a diagram of a structure of a data packet according to an embodiment of this application;
FIG. 7 is a diagram of data transmission according to an embodiment of this application;
FIG. 8 is a diagram of a negotiation process between a sending device and a receiving device according to an embodiment of this application;
FIG. 9 is a diagram of configuring an IP address of a network device according to an embodiment of this application;
FIG. 10 is a diagram of a structure of a data transmission apparatus according to an embodiment of this application;
FIG. 11 is a diagram of a structure of another data transmission apparatus according to an embodiment of this application;
FIG. 12 is a diagram of a structure of a system according to an embodiment of this application; and
FIG. 13 is a diagram of a structure of a compute device according to an embodiment of this application.

### DESCRIPTION OF EMBODIMENTS

The following describes the solutions in embodiments provided in this application with reference to the accompanying drawings in this application.

In the specification, claims, and accompanying drawings of this application, the terms "first", "second", and the like are intended to distinguish between similar objects but do not necessarily indicate a specific order or sequence. It should be understood that the terms used in such a way are interchangeable in appropriate circumstances. This is merely a distinguishing manner used when objects having a same attribute are described in embodiments of this application.

A data center, as a type of data integration system, usually includes a computing system, a storage system, a communication system, a network device, an environment control system, a security system, and the like. The data center is usually used for computing and storing enterprise-level core services or operational data of enterprise organizations. Currently, data centers are respectively established in different regions to satisfy data processing requirements of enterprises or organizations in the regions. Data transmission needs to be performed between different data centers, and transmitted data needs to be analyzed and processed. In this way, the data can be fully analyzed, and data value can be mined. In addition, compute resources in the data centers can be effectively used.

Transmission of a massive amount of data needs to be performed between the data centers. In an offline transmission mode, data transmission efficiency is low. For example, a data center A exports, to a hard disk, data that needs to be transmitted, and then the hard disk is transported to a data center B. The data center B imports the data from the hard disk. Processes of importing the data to the hard disk, exporting the data from the hard disk, and transporting the hard disk all consume a large amount of time. In addition, the data may be lost or damaged in a transmission process. The offline data transmission mode cannot satisfy a data transmission requirement between the data centers. However, data transmission between the data centers through a network has the following problems: (1) Bandwidth of a transmission link between the data centers is limited by a network protocol, resulting in an upper bound on bandwidth utilization. A data transmission rate is limited by the upper bound on the bandwidth utilization. (2) In a data transmission mode by using a file as a granularity, file data that needs to be transmitted needs to be separately read from a storage device based on a storage address of the file, and time costs of data reading are high. In addition, the file data has file semantics and is easy to be parsed, affecting data transmission security. In addition, before data transmission, the file data needs to be encapsulated into a data packet. In a process of being encapsulated into the data packet, the read file data needs to be split or aggregated, to satisfy a size requirement of the data packet obtained through encapsulation. Efficiency of the process of encapsulating the file data into the data packet is low, resulting in a slow data transmission rate. (3) A sending device needs to occupy a large quantity of CPU resources to process data that needs to be sent. For example, the sending device needs to read, from a disk by using a file index, file data that needs to be transmitted, and perform operations such as encryption and fragmentation on the file data. These operations all need CPU resources. When the sending device needs to send a massive amount of data, even if bandwidth utilization of a transmission link is high, CPU resources of the sending device cannot satisfy a requirement for processing data and sending data, and the CPU resources of the sending device limit a data transmission rate, resulting in low efficiency of data transmission between the data centers.

In view of this, embodiments of this application provide a data transmission method. The method is applied to a sending device in a first data center and a receiving device in a second data center. The sending device obtains data transmission configuration information. The data transmission configuration information includes a network address of the receiving device and address information of to-be-transmitted data. The address information indicates storage address information of the to-be-transmitted data in a data disk. The to-be-transmitted data is pre-stored in the data disk of the sending device. The sending device pre-integrates data that needs to be transmitted by the first data center, namely, the to-be-transmitted data, and stores the to-be-transmitted data in the data disk of the sending device, to facilitate reading the to-be-transmitted data from the data disk. The sending device reads the to-be-transmitted data from the data disk based on the address information. The sending device reads, in a manner of reading data from the data disk, the to-be-transmitted data by using the data disk or a data block included in the data disk as a granularity. The sending device reads the to-be-transmitted data from the data disk, so that an underlying data storage mode can be shielded, a quantity of times that the data is read from the data disk can be reduced, and time overheads of data reading can be reduced. In addition, the to-be-transmitted data read from the data disk does not have high-level semantics, and is difficult to be parsed, so that data transmission security can be ensured. The sending device sends a first data packet to the receiving device based on the network address of the receiving device. The first data packet is obtained by encapsulating the to-be-transmitted data. The receiving device obtains the first data packet, and stores first data included in the first data packet in a data disk of the receiving device.

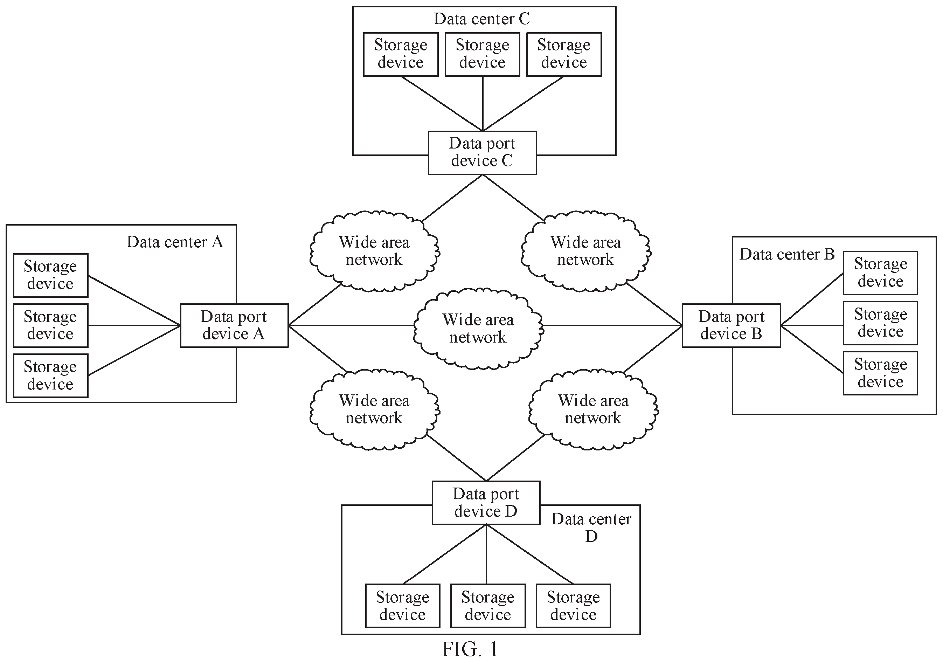

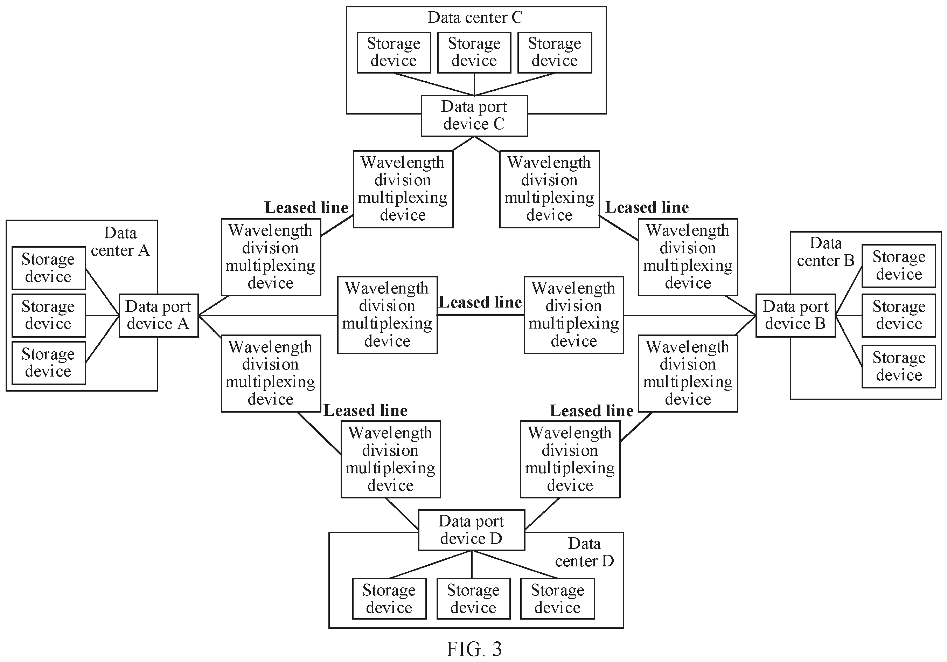

In a possible implementation, the sending device and the receiving device are data port devices included in the data centers. The data port device is configured to provide a data transmission service between the data centers. In addition, the data port device includes a storage medium, and can store the to-be-transmitted data. The data transmission method provided in embodiments of this application can be applied to network architectures shown in FIG. 1 and FIG. 3. Refer to FIG. 1. The network architecture includes a plurality of data centers: a data center A, a data center B, a data center C, and a data center D. Each data center includes a data port device and a plurality of storage devices. The storage devices included in each data center are connected to the data port device in the data center.

The storage device is, for example, an enterprise-level storage device, includes components such as a data processing unit (Data Processing Unit, DPU), a storage medium, and a front-end/back-end interface card, and can provide a storage service.

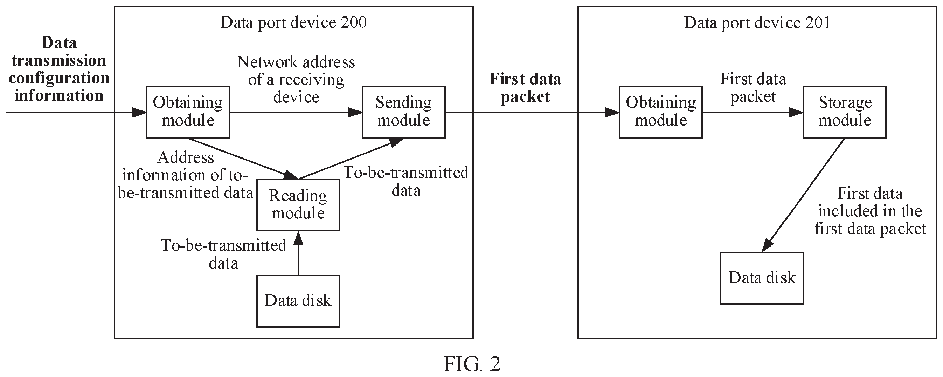

The data port device can be used as a sending device, and is configured to send to-be-transmitted data. Alternatively, the data port device can be used as a receiving device, and is configured to obtain to-be-transmitted data sent by another device. During actual application, the foregoing data transmission method may be performed by different modules in the data port device. In an example, FIG. 2 is a diagram of an application scenario according to an embodiment of this application. A data port device 200 is a sending device. A data port device 201 is a receiving device. The data port device 200 includes an obtaining module, a reading module, and a sending module. The obtaining module is configured to obtain data transmission configuration information. The data transmission configuration information includes a network address of the receiving device and address information of to-be-transmitted data. The reading module is configured to read the to-be-transmitted data from a data disk of the data port device based on the address information. The sending module is configured to send, to the receiving device based on the network address of the receiving device, a first data packet obtained by encapsulating the to-be-transmitted data. The data port device 201 includes an obtaining module and a storage module. The obtaining module is configured to obtain the first data packet sent by the sending device. The storage module is configured to store first data included in the first data packet in a data disk of the receiving device.

The data port devices are connected through a transmission path. Refer to FIG. 1. A data port device A is separately connected to a data port device B, a data port device C, and a data port device D, the data port device C is connected to the data port device B, and the data port device D is connected to the data port device B.

A manner of connecting data port devices in different data centers is not limited in embodiments of this application. In a possible implementation, refer to FIG. 1. The data port devices are connected through wide area networks. In another possible implementation, refer to FIG. 3. The data port devices can be connected through leased lines. The leased line is a dedicated network established based on operator network resources for data transmission, and ensures secure, high-speed, and reliable service transmission. The data port device is connected to the leased line via a wavelength division multiplexing device. The wavelength division multiplexing device is a device configured to provide signal transmission, multiplexing, routing, management, monitoring, and protection functions based on an optical channel. The data port device can be directly connected to the wavelength division multiplexing device, or connected to the wavelength division multiplexing device via a routing device. The wavelength division multiplexing device is connected to another device via a routing device, and can obtain more data streams via the routing device, to fully use leased line resources for data transmission.

Data transmission can be performed between data centers through a single path. For example, data transmission is performed between the data center A and the data center B. The data port device A can transmit data through one or more of the following three paths. The three paths are: a path from the data port device A to the data port device B, a path from the data port device A via the data port device C to the data port device B, and a path from the data port device A via the data port device D to the data port device B. For example, the data port device A is a sending device, the data port device B is a receiving device, and the data is transmitted through the path from the data port device A to the data port device B. The data port device A obtains to-be-transmitted data from one or more storage devices in the data center A, and stores the to-be-transmitted data in a data disk of the data port device A. In this way, the data port device A, namely, the sending device, can obtain data that needs to be transmitted and that is stored in the storage device included in the data center A, to integrate the to-be-transmitted data in the data port device A, so that the data port device A sends the to-be-transmitted data to the data port device B together, without a need to separately transmit the data based on different data transmission requirements, thereby reducing a quantity of data transmissions. The data port device A obtains data transmission configuration information, and reads the to-be-transmitted data from the data disk of the data port device A based on the data transmission configuration information. The data port device A encapsulates the to-be-transmitted data to obtain a data packet. The data port device A sends the data packet to the data port device B. The data port device B obtains the data packet and parses the data packet to obtain the to-be-transmitted data. The data port device B stores the obtained to-be-transmitted data in a data disk of the data port device B. After determining that transmission of the to-be-transmitted data is completed, the data port device B sends the to-be-transmitted data to the storage device in the data center B, to facilitate data processing by using data stored in the storage device.

In addition, data transmission can be performed between data centers through a plurality of paths. Data transmission between the data center A and the data center B is still used as an example. The data port device A can transmit data through one or more of the following three paths. The three paths are: a path from the data port device A to the data port device B, a path from the data port device A via the data port device C to the data port device B, and a path from the data port device A via the data port device D to the data port device B. For example, the data is transmitted through the path from the data port device A to the data port device B and the path from the data port device A via the data port device C to the data port device B. The data port device A is a sending device. The data port device A obtains to-be-transmitted data from the storage device in the data center A, and stores the to-be-transmitted data in a data disk of the data port device A. The data port device A obtains data transmission configuration information, and reads the to-be-transmitted data from the data disk of the data port device A based on the data transmission configuration information. The data port device A encapsulates the to-be-transmitted data to obtain a plurality of data packets. The data port device A sends a part of the data packets to the data port device B, and sends another part of the data packets to the data port device C. After obtaining the data packet, the data port device C parses the data packet to obtain to-be-transmitted data. The data port device C stores the obtained to-be-transmitted data in a data disk of the data port device C. Then, the data port device C is used as a sending device to encapsulate the to-be-transmitted data stored in the data disk, to obtain a data packet. The data port device C sends the data packet to the data port device B. The data port device B obtains the data packets sent by the data port device A and the data port device C respectively. The data port device B parses the data packets to obtain the to-be-transmitted data. The data port device B stores the obtained to-be-transmitted data in a data disk of the data port device B. After determining that transmission of the to-be-transmitted data is completed, the data port device B sends the to-be-transmitted data to a storage device B in the data center B, to facilitate subsequent data processing.

It should be noted that FIG. 1 and FIG. 3 provided in embodiments of this application are merely examples of scenarios in which the network architectures provided in embodiments of this application are implemented. A specific scenario to which the data transmission method provided in embodiments of this application is applied is not limited in embodiments of this application.

The following describes in detail various non-limiting specific implementations of the data transmission method provided in embodiments of this application.

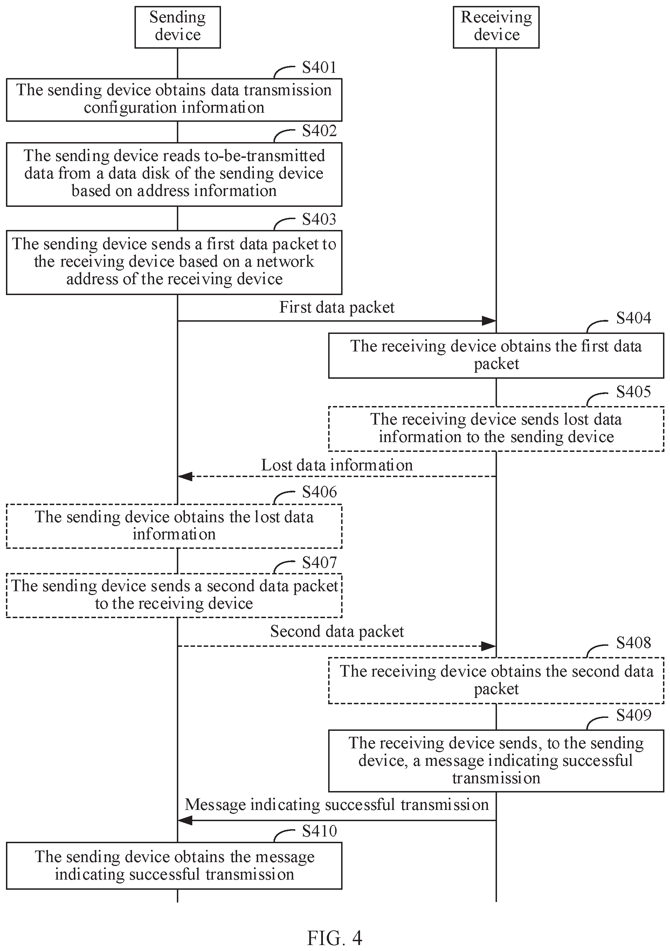

FIG. 4 is a schematic flowchart of a data transmission method according to an embodiment of this application. The method is applied to a sending device in a first data center and a receiving device in a second data center. The sending device is, for example, a data port device in the first data center. The receiving device is, for example, a data port device in the second data center. The network architecture shown in FIG. 1 or FIG. 3 is used as an example. For example, data is sent from the data center A to the data center B through a path from the data port device A to the data port device B. The sending device is, for example, the data port device A, and the receiving device is the data port device B. For example, data is sent from the data center A to the data center B through a path from the data port device A via the data port device C to the data port device B. The sending device is, for example, the data port device A, and the receiving device is the data port device C; or the sending device is the data port device C, and the receiving device is the data port device B.

Refer to FIG. 4. The method may include S401 to S410.

S401: The sending device obtains data transmission configuration information.

The data transmission configuration information indicates the sending device to send to-be-transmitted data. The data transmission configuration information may be generated by a management plane of the sending device, or may be generated by a management device of the sending device and sent to the sending device. Generation of the data transmission configuration information may be automatically triggered based on a preset data transmission requirement, or triggered by a user via the management plane of the sending device or via the management device of the sending device.

The data transmission configuration information includes a network address of the receiving device and address information of the to-be-transmitted data.

The network address of the receiving device is, for example, an internet protocol (Internet Protocol, IP) address of the receiving device. The network address of the receiving device may be configured by the user via the management plane of the sending device or via the management device of the sending device.

The to-be-transmitted data is pre-stored in a data disk of the sending device. The data disk of the sending device is, for example, a disk included in a storage array of the sending device. A source of the to-be-transmitted data is not limited in this embodiment of this application. In a possible implementation, the to-be-transmitted data is copied from a storage device in the first data center to the data disk of the sending device through distributed file system scheduling, or by remote copying or offline copying via a network file system (Network File System, NFS). In another possible implementation, the sending device obtains to-be-transmitted data sent by a data port device in another data center. For example, in the scenario shown in FIG. 1 or FIG. 3, data is sent from the data center A to the data center B through the path from the data port device A via the data port device C to the data port device B. The data port device C first obtains to-be-transmitted data sent by the data port device A, and then is used as a sending device to send the to-be-transmitted data to the data port device B. After obtaining the to-be-transmitted data, the sending device stores the to-be-transmitted data in the data disk, to facilitate reading the to-be-transmitted data from the data disk when the to-be-transmitted data needs to be transmitted. In this way, data that needs to be transmitted can be integrated, so that the sending device sends the data to the receiving device together.

The data transmission configuration information includes the address information of the to-be-transmitted data. The address information indicates a storage location of the to-be-transmitted data in the data disk. The address information of the to-be-transmitted data indicates storage address information of the to-be-transmitted data in the data disk. In an example, the address information of the to-be-transmitted data includes an identifier of the data disk that stores the to-be-transmitted data, and a start address and a length of the to-be-transmitted data in the data disk. The identifier of the data disk that stores the to-be-transmitted data is a unique identifier of the data disk. Based on the address information, the sending device can read the to-be-transmitted data from the data disk. In some possible implementations, the to-be-transmitted data is stored in one data disk of the sending device. The address information of the to-be-transmitted data includes an identifier of the data disk, and a start address and a length of the to-be-transmitted data in the data disk. In some other possible implementations, the to-be-transmitted data is separately stored in a plurality of data disks of the sending device. The address information of the to-be-transmitted data includes an identifier of each data disk included in the plurality of data disks, and a start address and a length of to-be-transmitted data stored in each data disk.

S402: The sending device reads the to-be-transmitted data from the data disk of the sending device based on the address information.

The sending device determines, based on the identifier that is of the data disk storing the to-be-transmitted data and that is included in the address information, the data disk storing the to-be-transmitted data, and determines, based on the start address and the length of the to-be-transmitted data in the data disk, the storage location of the to-be-transmitted data in the data disk. The sending device reads the to-be-transmitted data from the data disk.

In the manner of reading the to-be-transmitted data from the data disk, read/write efficiency is high. In comparison with a data transmission mode by using a file as a granularity, there is no need to perform a plurality of addressing operations to obtain file data, and the to-be-transmitted data stored in the data disk can be read through only a few addressing operations, thereby reducing time overheads of data reading. In addition, in the manner of reading the to-be-transmitted data from the data disk, an underlying data storage organization manner can be shielded, only data stored in the data disk is concerned, and data reading is not affected by file storage, block storage, object storage, or another storage organization manner.

In addition, security of the to-be-transmitted data read based on a disk block is high. The to-be-transmitted data read based on the disk block does not have high-level semantics and cannot be parsed, thereby ensuring data security.

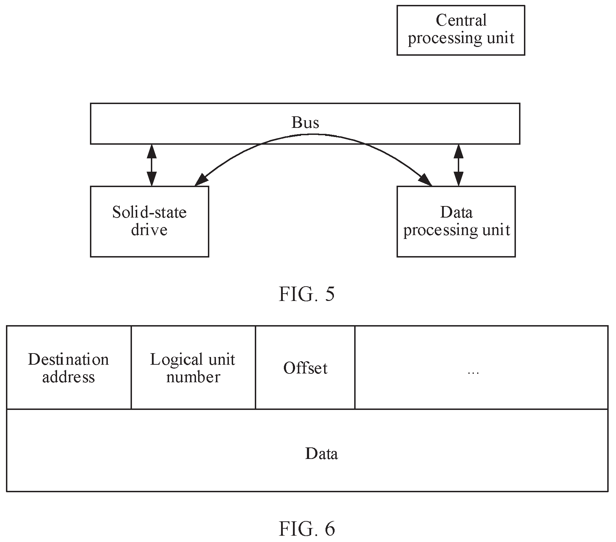

In a possible implementation, the sending device includes a DPU. The sending device reads the to-be-transmitted data from the data disk based on the address information via the DPU. FIG. 5 is a diagram of reading data from a data disk via a DPU according to an embodiment of this application. The DPU directly reads, through a bus, data stored in a solid-state drive (Solid-State Drive, SSD). The sending device directly reads the data in the data disk via the DPU, without a need to be processed by a CPU, thereby saving CPU resources and effectively mitigating a problem that efficiency of data transmission between data centers is low due to limited CPU resources of the sending device. In addition, the data in the data disk is directly read via the DPU, so that a data read/write path can be shortened, data reading efficiency can be improved, and a data transmission rate between the data centers can be improved.

A manner in which the sending device reads the to-be-transmitted data from the data disk is not limited in this embodiment of this application. In an example, the sending device reads a data block from the data disk of the sending device. The data block includes first data in the to-be-transmitted data. A size of the data block is determined based on a maximum transmission unit (Maximum Transmission Unit, MTU) included in a transmission parameter for current data transmission. The size of the data block is less than or equal to the MTU. The MTU may be pre-configured based on the data transmission configuration information, or may be determined through negotiation between the sending device and the receiving device.

S403: The sending device sends a first data packet to the receiving device based on the network address of the receiving device.

The sending device encapsulates the obtained to-be-transmitted data, to obtain the first data packet. An amount of the to-be-transmitted data is usually large. The to-be-transmitted data is split into a plurality of pieces of first data, and the first data is separately encapsulated to obtain a plurality of first data packets.

A payload of each first data packet includes the first data in the to-be-transmitted data. A packet header of the first data packet includes an identifier of a data disk that stores the first data, and an offset of the first data in the data disk.

In an example, the packet header of the first data packet includes a destination address, the identifier of the data disk that stores the first data, and the offset (offset) of the first data in the data disk. FIG. 6 is a diagram of a structure of a data packet according to an embodiment of this application. The destination address is the network address of the receiving device. The identifier of the data disk that stores the first data is, for example, a logical unit number (Logical Unit Number Identity document, LUN ID) of the data disk. Other information can be further encapsulated in the packet header. This is not limited in this embodiment of this application.

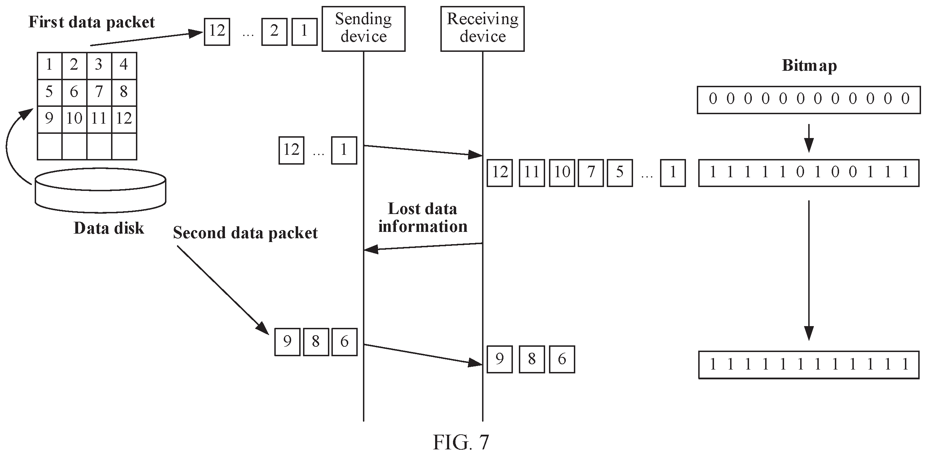

When the sending device reads, based on the MTU, the data block including the first data, the sending device encapsulates each read data block to obtain the first data packet. In this way, the read data block including the first data can be directly encapsulated, and there is no need to further split or aggregate the read to-be-transmitted data. This facilitates encapsulation, improves an encapsulation rate, and further improves data transmission efficiency. The sending device sends the first data packet to the receiving device. When there are a plurality of first data packets, the sending device sequentially sends the first data packets in a location sequence of first data included in the first data packets in the data disk. In an example, FIG. 7 is a diagram of data transmission according to an embodiment of this application. The sending device encapsulates the data block that is read from the data disk and that includes the first data, to obtain 12 data packets. Packet headers of the 12 data packets include identifiers of data disks, which are LUN IDs of the data disks, and offsets of the first data in the data disks. A sequence number of each data packet is a sequence number of a sending sequence of the data packet. The sending device sequentially sends the data packets to the receiving device.

The sending device transmits the data packet to the receiving device by using an unreliable transmission protocol. A specific type of the unreliable transmission protocol is not limited in this embodiment of this application. For example, the unreliable transmission protocol is a user datagram protocol (User Datagram Protocol, UDP), or an unreliable connected (Unreliable Connected, UC) mode of a remote direct memory access (Remote Direct Memory Access, RDMA) protocol. When the unreliable transmission protocol is used for transmitting the data packet, no acknowledgment or retransmission is needed in a data packet transmission process, and the to-be-transmitted data does not need to be buffered, thereby improving bandwidth utilization between the sending device and the receiving device. The data transmission path between the sending device and the receiving device can be pre-configured based on the data transmission configuration information. In a possible implementation, the data transmission configuration information further includes a network address of a forwarding device included on the data transmission path. The sending device sends the first data packet to the forwarding device, so that the forwarding device sends the first data packet to the receiving device based on the network address of the receiving device. The forwarding device is, for example, a routing device or a wavelength division multiplexing device. This is not limited in this embodiment of this application.

There are one or more data transmission paths. The sending device can allocate, based on data transmission requirements of different data transmission paths, quantities of first data packets transmitted through the different data transmission paths.

In addition, the user can configure a data transmission trigger condition via the management plane of the sending device. The data transmission trigger condition is a condition for triggering the sending device to send the to-be-transmitted data. In an example, the data transmission trigger condition includes one or both of a transmission trigger mode and a transmission start moment. The transmission trigger mode is, for example, periodic triggering or one-time triggering. The transmission start moment is a preset moment for starting to transmit the to-be-transmitted data. When the data transmission trigger condition is satisfied, the sending device sends the first data packet to the receiving device based on the network address of the receiving device.

S404: The receiving device obtains the first data packet.

The receiving device obtains the first data packet. The receiving device parses the first data packet, and stores the first data included in the payload of the first data packet in a data disk of the receiving device.

An implementation in which the receiving device writes the first data into the data disk of the receiving device is not limited in this embodiment of this application. In an example, the receiving device parses the first data packet to obtain the offset of the first data. The receiving device stores the first data in a storage space indicated by the offset of the first data in the data disk of the receiving device. The to-be-transmitted data read by the sending device from the data disk of the sending device is stored continuously in the data disk. The first data stored by the receiving device based on the offset of the first data should also be stored continuously in the data disk of the receiving device. If, in the data disk that stores the to-be-transmitted data and that is of the receiving device, there is a storage space without stored data between two storage spaces storing the first data, it indicates that there is lost to-be-transmitted data.

After determining that a transmission process of transmitting the first data packet once ends, the receiving device determines lost data information based on the to-be-transmitted data stored in the data disk of the receiving device.

A specific implementation in which the receiving device determines that the transmission process of transmitting the first data packet once ends is not limited in this embodiment of this application. In an example, after completing sending of a first data packet that needs to be sent for current data transmission, the sending device sends, to the receiving device, a message indicating that transmission is completed. The receiving device determines, based on the obtained message indicating that transmission is completed, that a current transmission process of transmitting the first data packet ends. In another example, the receiving device determines, based on a result of negotiation with the sending device, a quantity of first data packets that need to be transmitted. For example, the receiving device determines the quantity of first data packets based on an amount of the to-be-transmitted data and an MTU that are determined through negotiation with the sending device. After determining that a last first data packet is obtained, the receiving device determines that a current transmission process of the first data packet ends. Alternatively, if the receiving device does not receive the last first data packet within preset time, the receiving device determines that the current process of sending the first data packet ends.

The receiving device determines the lost data information based on the to-be-transmitted data stored in the data disk of the receiving device.

In an example, the receiving device can determine, based on the amount of the to-be-transmitted data pre-negotiated with the sending device, a storage space that needs to store the to-be-transmitted data, in the data disk that is of the receiving device and that stores the to-be-transmitted data. If after the current transmission process of the first data packet ends, there is a storage space without stored data in the storage space that stores the to-be-transmitted data, it is determined that there is lost to-be-transmitted data. The receiving device can determine an offset of lost data and a lost first data packet based on an offset of the storage space without stored data. The to-be-transmitted data read by the sending device from the data disk of the sending device is stored continuously in the data disk, and the sending device sends the first data packet based on a storage sequence of the first data included in the first data packet. Identifiers of data disks included in adjacent first data packets are the same. Then, the receiving device determines, based on a transmission sequence and an identifier of a data disk included in a packet header of another first data packet adjacent to the lost first data packet, an identifier of a data disk that is of the sending device and that stores the lost data.

In another example, the receiving device maintains a bitmap. The bitmap is used for determining whether a data packet is received. A quantity of data bits included in the bitmap is the same as a quantity of all data packets that need to be transmitted by the sending device. In a possible implementation, the receiving device determines, based on the amount of the to-be-transmitted data and the MTU that are negotiated with the sending device, the quantity of data bits included in the bitmap. Specifically, a ratio of the amount of the to-be-transmitted data to the MTU is calculated, to obtain the quantity of data bits included in the bitmap. The data bits included in the bitmap are in one-to-one correspondence with data packets. The correspondence between the data bit and the data packet is determined based on the quantity of data bits in the bitmap and the offset of the first data included in the first data packet. For example, an amount of the first data included in the first data packet is a value of the MTU. The receiving device can determine, based on an amount of the to-be-transmitted data and an MTU in current transmission that are determined through pre-negotiation, an offset of the first data included in each first data packet. Offsets of first data included in first data packets are in one-to-one correspondence with the data bits included in the bitmap.

A value of a data bit indicates whether a data packet corresponding to the data bit is received. In an example, refer to FIG. 7. If a value of a data bit is 0, it indicates that a data packet corresponding to the data bit is not received. If a value of a data bit is 1, it indicates that a data packet corresponding to the data bit is received. An initial value of each data bit included in the bitmap is 0. The receiving device adjusts, based on an obtained first data packet, a value of a data bit corresponding to the first data packet in the bitmap to 1. In this way, after current sending of the first data packet ends, the receiving device can determine, based on the bitmap, whether there is a first data packet that fails to be transmitted. If the bitmap includes a data bit with a value of 0, it indicates that a first data packet corresponding to the data bit is lost. FIG. 7 is used as an example. A data packet corresponding to a bit with a value of 0 in the bitmap fails to be transmitted, that is, a 6^{th} first data packet, an 8^{th} first data packet, and a 9^{th} first data packet fail to be transmitted.

The lost data information is determined based on the determined lost first data packet. In an example, the receiving device determines, based on the transmission sequence and the identifier of the data disk included in the packet header of the another first data packet adjacent to the lost first data packet, the identifier of the data disk that is of the sending device and that stores the lost data. The identifier of the data disk that is of the sending device and that stores the lost data is the same as the identifier of the data disk included in the packet header of the another first data packet adjacent to the lost first data packet. The offset of the lost data is determined, for example, based on the transmission sequence and an offset included in the first data packet adjacent to the lost first data packet and the MTU. For another example, when the offsets of the first data included in the first data packets are in one-to-one correspondence with the data bits included in the bitmap, the offset of the lost data is an offset of first data corresponding to a data bit indicating that a first data packet is lost. In a possible implementation, when the receiving device fails to receive all the first data packets, and a part of the first data packets fail to be transmitted, S405 to S408 are performed.

In another possible implementation, when the receiving device successfully receives all the first data packets, S409 and S410 are performed.

S405: The receiving device sends the lost data information to the sending device.

If the receiving device determines that there is a first data packet that fails to be transmitted, the lost data information is determined. The lost data information includes the identifier of the data disk that stores the lost data and the offset of the lost data.

S406: The sending device obtains the lost data information.

The sending device can determine, based on the identifier of the data disk that stores the lost data and the offset of the lost data that are included in the obtained lost data information, the lost data of the receiving device, namely, to-be-transmitted data that is not successfully obtained. The sending device reads, based on the offset of the lost data, the data from the data disk corresponding to the identifier of the data disk that stores the lost data. It should be noted that, when the amount of the first data encapsulated in the first data packet is the MTU, the sending device reads, starting from a storage address indicated by the offset, a data block with an amount of data equal to the MTU.

The sending device encapsulates the lost data read based on the lost data information into a second data packet. A payload of the second data packet includes second data in the lost data. A packet header of the second data packet includes an identifier of a data disk that stores the second data and an offset of the second data in the data disk that stores the second data.

A manner of being encapsulated into the second data packet in S406 may be the same as the manner of being encapsulated into the first data packet in S403. For details, refer to the manner of being encapsulated into the first data packet described in S403. The details are not described herein again.

S407: The sending device sends the second data packet to the receiving device.

S408: The receiving device obtains the second data packet.

After obtaining the second data packet, the receiving device writes the second data included in the second data packet into the data disk of the receiving device. A manner in which the receiving device writes the second data is similar to the foregoing manner in which the first data is written. In an example, a location at which the receiving device writes the second data into the data disk is determined based on the offset of the second data included in the packet header of the second data packet.

After obtaining the second data packet, the receiving device determines whether there is still to-be-transmitted data that fails to be transmitted.

In an example, if after a current transmission process of the second data packet ends, in the data disk that stores the to-be-transmitted data and that is of the receiving device, there is still a storage space without stored data in the storage space that needs to store the to-be-transmitted data, it is determined that there is lost data.

In another example, the receiving device determines, by using a bitmap, whether there is lost to-be-transmitted data. The receiving device adjusts, by using the obtained second data packet, a value of a data bit included in the bitmap.

Refer to FIG. 7. The receiving device adjusts, based on the second data packet obtained in a 2^{nd} time of transmission, the value of the data bit included in the bitmap. The receiving device modifies, based on the offset of the second data included in the second data packet, a value of a corresponding data bit in the bitmap to 1.

If the receiving device obtains all the to-be-transmitted data after the sending device sends the second data packet currently, a data transmission process between the sending device and the receiving device ends, and S409 and S410 are performed.

If the receiving device determines that there is still lost data, namely, to-be-transmitted data that fails to be transmitted, that is, there is lost to-be-transmitted data, the receiving device continues to send currently determined lost data information to the sending device, so that the sending device feeds back a data packet. This is repeated a plurality of times until all data packets are transmitted, and S409 and S410 are performed.

S409: The receiving device sends, to the sending device, a message indicating successful transmission.

If the to-be-transmitted data received by the receiving device is data that needs to be processed by the second data center, after determining that all the to-be-transmitted data is successfully transmitted, the receiving device copies the to-be-transmitted data stored in the data disk of the receiving device to a storage device in the second data center, to facilitate subsequent data processing. The receiving device deletes the to-be-transmitted data stored in the data disk of the receiving device, to allocate a storage resource to a subsequent data transmission service.

If the to-be-transmitted data received by the receiving device is data that needs to be forwarded by the receiving device, the receiving device is used as a sending device to send the to-be-transmitted data to another receiving device.

S410: The sending device obtains the message indicating successful transmission.

After obtaining the message indicating successful transmission, the sending device determines that all the to-be-transmitted data is successfully transmitted currently. The sending device deletes the to-be-transmitted data stored in the data disk of the sending device, to allocate a storage resource to a subsequent data transmission service.

The foregoing describes the data transmission process between the sending device and the receiving device. In a possible implementation, before sending a data packet to the receiving device, the sending device first establishes a connection to the receiving device, and negotiates with the receiving device. A manner of establishing the connection between the sending device and the receiving device is not limited in this embodiment of this application. For example, the sending device establishes a TCP connection to the receiving device.

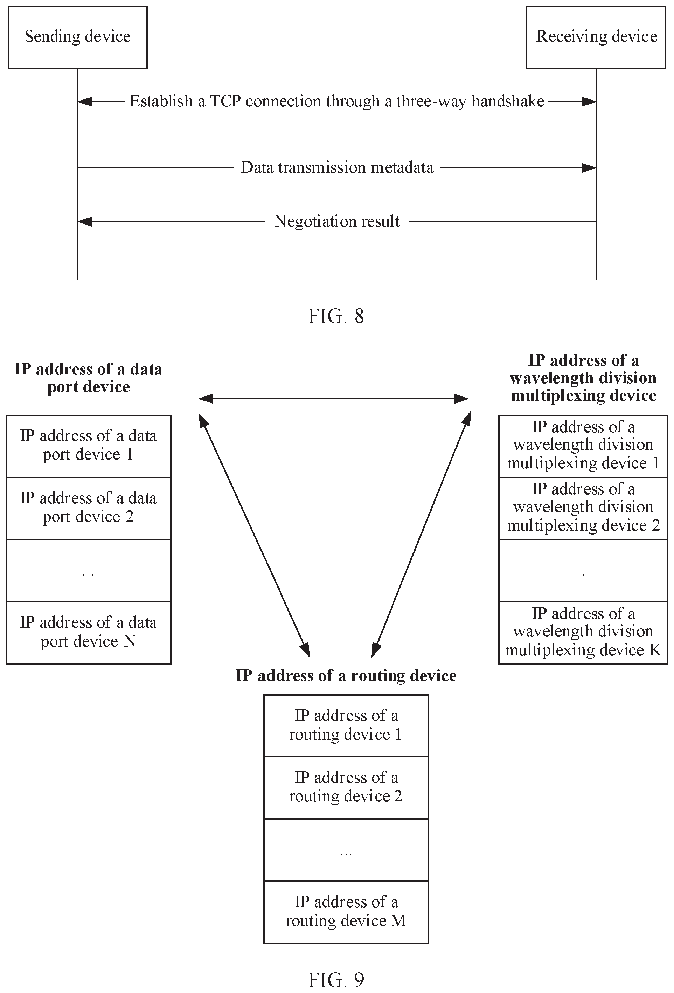

In an example, FIG. 8 is a diagram of a negotiation process between a sending device and a receiving device according to an embodiment of this application. The sending device first establishes a TCP connection to the receiving device through a three-way handshake. The sending device sends data transmission metadata to the receiving device. The data transmission metadata is used for describing a data transmission requirement. For example, the data transmission metadata includes one or more of a transmission data amount, transmission bandwidth, and an MTU. A manner of obtaining the data transmission metadata is not limited in this embodiment of this application. In an implementation, the data transmission configuration information includes the data transmission metadata. The data transmission metadata can be configured by the user via the management plane of the sending device or via the management device of the sending device.

After receiving the data transmission metadata, the receiving device determines, based on a resource condition of the receiving device, whether current data transmission can be supported. When the data transmission metadata includes the transmission data amount, the receiving device can determine, based on the transmission data amount, whether a storage space of the receiving device supports storing current to-be-transmitted data. When the data transmission metadata includes the transmission bandwidth or the MTU, the receiving device can determine, based on a data processing capability, whether a data sending rate corresponding to the transmission bandwidth or the MTU is supported.

The receiving device sends a negotiation result to the sending device. The negotiation result indicates whether the receiving device can support data transmission, or indicates a transmission parameter supported by the receiving device. In an example, the negotiation result includes a maximum amount of data stored in the receiving device, transmission bandwidth supported by the receiving device, and an MTU supported by the receiving device. In another example, the negotiation result includes a determining result that is determined by the receiving device and that indicates whether data transmission is supported.

The sending device obtains the negotiation result of the receiving device. The sending device can determine, based on the negotiation result of the receiving device, whether the receiving device can support data transmission.

For example, the negotiation result includes a maximum amount of data stored in the receiving device, transmission bandwidth supported by the receiving device, and an MTU supported by the receiving device. If the maximum amount of data stored in the receiving device is less than the transmission data amount, the sending device determines that the receiving device cannot receive the to-be-transmitted data, current data transmission negotiation ends, and subsequent data transmission is not performed. For another example, if the maximum amount of data stored in the receiving device is greater than or equal to the transmission data amount, but the transmission bandwidth supported by the receiving device is less than the transmission bandwidth, or the MTU is less than the MTU supported by the receiving device, the sending device determines that the receiving device can receive the to-be-transmitted data, and determines, based on the transmission bandwidth or the MTU that can be supported by the receiving device, a transmission parameter for sending a data packet.

In addition to transmitting data, a sending device can be further configured to manage a transmission path. In a possible implementation, the sending device obtains device configuration information. In an example, the device configuration information includes an identifier of a network device. The identifier of the network device is a globally unique identifier of the network device, for example, an IP address of the network device. The network device includes, for example, a data port device, a routing device, and a wavelength division multiplexing device. For example, FIG. 9 is a diagram of configuring an IP address of a network device according to an embodiment of this application. IP addresses of the data port device, the routing device, and the wavelength division multiplexing device that are connected to each other are configured based on the device configuration information. The data port device can be connected to the wavelength division multiplexing device directly or via the routing device.

In another example, the device configuration information includes path configuration information for the sending device. The path configuration information includes the network address of the sending device, the network address of the receiving device, and a network address of a network device included on a path between the sending device and the receiving device. The network device is, for example, a critical forwarding device included on the path. For example, in a scenario in which the sending device and the receiving device are connected through a leased line, the network device includes a wavelength division multiplexing device connected to the sending device and a wavelength division multiplexing device connected to the receiving device. The wavelength division multiplexing device connected to the sending device may also be referred to as a near-end wavelength division multiplexing device. The wavelength division multiplexing device connected to the receiving device may also be referred to as a remote wavelength division multiplexing device. Refer to Table 1. The table is used for maintaining the path between the sending device and the receiving device.

**Table 1**

| Sending device | Near-end wavelength division multiplexing device | Far-end wavelength division multiplexing device | Receiving device |
|---|---|---|---|
| | | | |
| | | | |

The sending device can maintain the path between the sending device and the receiving device based on the path configuration information. For example, the sending device can separately establish a connection to the receiving device and the network device based on the network address of the receiving device and the network address of the network device included on the path between the sending device and the receiving device. For example, the sending device establishes a TCP connection to the receiving device and the network device. The sending device obtains device status information of the receiving device and device status information of the network device. In an example, the sending device, the receiving device, and the network device separately implement a heartbeat mechanism through the TCP connection, to detect a device status of the receiving device and a device status of the network device. Based on the obtained device status information of the network device and the obtained device status information of the receiving device, the sending device can maintain the path between the sending device and the receiving device, detect a failure of the receiving device or the network device in a timely manner, and determine an unavailable path in a timely manner.

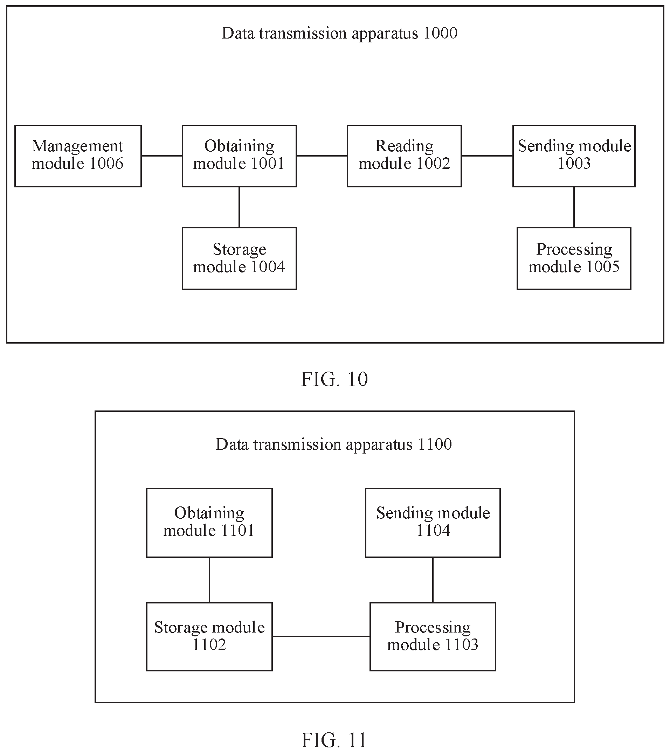

According to the data transmission method provided in this embodiment of this application, refer to FIG. 10. An embodiment of this application further provides a diagram of a structure of a data transmission apparatus 1000. The data transmission apparatus 1000 can implement the data transmission method applied to the sending device shown in FIG. 4. FIG. 10 is a diagram of a structure of a data transmission apparatus according to an embodiment of this application. The data transmission apparatus 1000 includes an obtaining module 1001, a reading module 1002, a sending module 1003, a storage module 1004, a processing module 1005, and a management module 1006. For specific functions of the modules in the data transmission apparatus 1000, refer to related descriptions of the sending device in the foregoing embodiments.

Specifically, the obtaining module 1001 is configured to obtain data transmission configuration information, where the data transmission configuration information includes a network address of a receiving device and address information of to-be-transmitted data, the address information indicates storage address information of the to-be-transmitted data in a data disk, the data disk is a data disk of the sending device, the to-be-transmitted data is data that needs to be transmitted by the first data center, and the receiving device belongs to a second data center.

The reading module 1002 is configured to read the to-be-transmitted data from the data disk of the sending device based on the address information.

The sending module 1003 is configured to send a first data packet to the receiving device based on the network address of the receiving device, where the first data packet is obtained by encapsulating the to-be-transmitted data.

In a possible implementation, the sending device transmits the first data packet to the receiving device by using an unreliable transmission protocol.

In a possible implementation, a payload of the first data packet includes first data in the to-be-transmitted data, and a packet header of the first data packet includes an identifier of a data disk that stores the first data, and an offset of the first data in the data disk that stores the first data.

In a possible implementation, the obtaining module 1001 is further configured to obtain lost data information sent by the receiving device, where the lost data information includes an identifier of a data disk that stores lost data and an offset of the lost data in the data disk that stores the lost data.

The sending module 1003 is further configured to send a second data packet to the receiving device, where a payload of the second data packet includes the lost data read from the data disk of the sending device based on the lost data information.

In a possible implementation, the reading module 1002 is specifically configured to read the to-be-transmitted data from the data disk of the sending device based on the address information via a data processing unit DPU of the sending device.

In a possible implementation, the sending module 1003 is specifically configured to send the first data packet to the receiving device based on the network address of the receiving device through a leased line between the sending device and the receiving device.

In a possible implementation, the data transmission configuration information further includes data transmission metadata, the data transmission metadata is used for describing a data transmission requirement, and before sending the first data packet to the receiving device based on the network address of the receiving device, the sending module 1003 is further configured to send the data transmission metadata to the receiving device based on the network address of the receiving device.

The receiving module is further configured to: obtain a negotiation result of the receiving device, and determine, based on the negotiation result, a transmission parameter for sending a data packet.

In a possible implementation, the transmission parameter of the data packet includes a maximum transmission unit MTU, the reading module 1002 is specifically configured to read a data block from the data disk of the sending device based on the address information, the data block includes the first data, a size of the data block is determined based on the MTU, and the first data packet is obtained by encapsulating the data block including the first data.

In a possible implementation, the to-be-transmitted data is separately stored in a plurality of data disks of the sending device, and the address information of the to-be-transmitted data includes an identifier of each data disk included in the plurality of data disks, and a start address and a length of to-be-transmitted data stored in each data disk.

In a possible implementation, the obtaining module 1001 is further configured to obtain the to-be-transmitted data, where the to-be-transmitted data is sent by a storage device included in the first data center and by one or more sending devices included in another data center other than the first data center.

The apparatus further includes:
a storage module 1004, further configured to store the to-be-transmitted data in the data disk of the sending device.

In a possible implementation, the apparatus further includes:
a processing module 1005, configured to: if it is determined that transmission of the to-be-transmitted data ends, delete the to-be-transmitted data stored in the data disk.

In a possible implementation, the obtaining module 1001 is configured to obtain device configuration information, where the device configuration information includes a network address of the sending device, the network address of the receiving device, and a network address of a network device included on a path between the sending device and the receiving device.

The apparatus further includes:
a management module 1006, configured to maintain the path between the sending device and the receiving device based on the device configuration information.

In a possible implementation, the management module 1006 is specifically configured to: separately establish a connection to the receiving device and the network device based on the device configuration information; obtain device status information of the receiving device and device status information of the network device; and determine, based on the device status information of the receiving device and the device status information of the network device, whether the path between the sending device and the receiving device is available.

In a possible implementation, the data transmission configuration information further includes a data transmission trigger condition; and
the sending module 1003 is specifically configured to, in response to satisfying the data transmission trigger condition, send the first data packet to the receiving device based on the network address of the receiving device.

In a possible implementation, the data transmission configuration information further includes a network address of a forwarding device included in the data transmission path, the sending module 1003 is specifically configured to send the first data packet to the forwarding device based on the network address of the forwarding device, and the forwarding device is configured to send the first data packet to the receiving device based on the network address of the receiving device.

In a possible implementation, there are one or more data transmission paths between the sending device and the receiving device.

According to the data transmission method provided in this embodiment of this application, refer to FIG. 11. An embodiment of this application further provides a diagram of a structure of another data transmission apparatus 1100. The data transmission apparatus 1100 can implement the data transmission method applied to the receiving device shown in FIG. 4. FIG. 11 is a diagram of a structure of another data transmission apparatus according to an embodiment of this application. The data transmission apparatus 1100 includes an obtaining module 1101, a storage module 1102, a processing module 1103, and a sending module 1104. For specific functions of the modules in the data transmission apparatus 1100, refer to related descriptions of the receiving device in the foregoing embodiments.

Specifically, the obtaining module 1101 is configured to obtain a first data packet sent by a sending device, where a payload of the first data packet includes first data in to-be-transmitted data, and a packet header of the first data packet includes an identifier of a data disk that stores the first data, and an offset of the first data.

The storage module 1102 is configured to store, in a data disk of the receiving device, first data included in the first data packet.

In a possible implementation, the storage module 1102 is specifically configured to store the first data in a storage space indicated by the offset of the first data in the data disk of the receiving device.

In a possible implementation, the apparatus further includes:
a processing module 1103, configured to determine lost data information based on the to-be-transmitted data stored in the data disk of the receiving device, where the lost data information includes an identifier of a data disk that is of the sending device and that stores lost data, and an offset of the lost data; and
a sending module 1104, configured to send the lost data information to the sending device.

In a possible implementation, the processing module 1103 is specifically configured to: determine a lost first data packet based on a bitmap, where each data bit included in the bitmap corresponds to each first data packet, and a value of the data bit indicates whether the first data packet corresponding to the data bit is received; and determine the lost data information based on the lost first data packet.

In a possible implementation, the obtaining module 1101 is further configured to obtain data transmission metadata sent by the sending device, where the data transmission metadata is used for describing a data transmission requirement.

The apparatus further includes:
a sending module 1104, configured to send a negotiation result to the sending device, where the negotiation result indicates that the receiving device satisfies the data transmission requirement.

In a possible implementation, the apparatus further includes:
a sending module 1104, configured to: send the to-be-transmitted data to a storage device included in the second data center, and delete the to-be-transmitted data stored in the data disk of the receiving device.

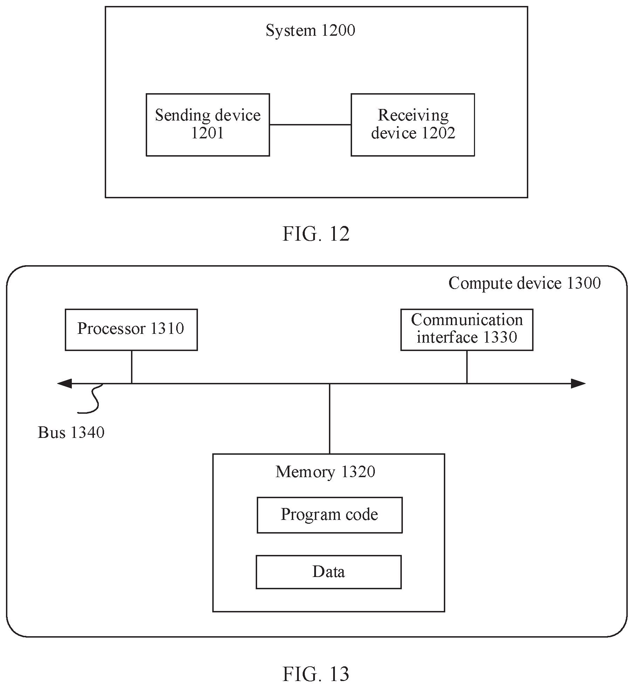

According to the data transmission method provided in this embodiment of this application, refer to FIG. 12. An embodiment of this application further provides a diagram of a structure of a system 1200. The system 1200 includes a sending device 1201 and a receiving device 1202. The sending device 1201 is connected to the receiving device 1202. The sending device 1201 may be the sending device in the embodiment shown in FIG. 4 and the embodiment shown in FIG. 8. The receiving device 1202 may be the receiving device in the embodiment shown in FIG. 4 and the embodiment shown in FIG. 8.

FIG. 13 is a diagram of a structure of a compute device. The data transmission apparatus 1300 may be deployed on the device. The compute device may be a data port device or the like, and may be specifically a device configured to implement a function of the sending device or a function of the receiving device in the foregoing embodiments.

As shown in FIG. 13, the compute device 1300 includes a processor 1310, a memory 1320, a communication interface 1330, and a bus 1340. The processor 1310, the memory 1320, and the communication interface 1330 communicate with each other through the bus 1340. The bus 1340 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used for representation in FIG. 13, but this does not mean that there is only one bus or only one type of bus. The communication interface 1330 is configured to communicate with the outside, for example, send a first data packet to a receiving device; for another example, obtain a first data packet sent by a sending device.

The processor 1310 may be a central processing unit (central processing unit, CPU), an application-specific integrated circuit (application-specific integrated circuit, ASIC), a graphics processing unit (graphics processing unit, GPU), or one or more integrated circuits. Alternatively, the processor 1310 may be an integrated circuit chip and has a signal processing capability. In an implementation process, functions of the modules in the data transmission apparatus may be completed by using an integrated logic circuit of hardware in the processor 1310, or by using instructions in a form of software. Alternatively, the processor 1310 may be a general-purpose processor, a digital signal processor (digital signal processor, DSP), a field programmable gate array (field programmable gate array, FPGA) or another programmable logic device, a discrete gate or a transistor logic device, or a discrete hardware component, and may implement or perform the methods, steps, and logical block diagrams disclosed in embodiments of this application. The general-purpose processor may be a microprocessor, or the processor may be any conventional processor, or the like. The methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1320. The processor 1310 reads information in the memory 1320, and completes some or all functions of the data transmission apparatus in combination with hardware of the processor 1310.

The memory 1320 may include a volatile memory (volatile memory), for example, a random access memory (random access memory, RAM). The memory 1320 may further include a non-volatile memory (non-volatile memory), for example, a read-only memory (read-only memory, ROM), a flash memory, an HDD, or an SSD.

The memory 1320 stores executable code, and the processor 1310 executes the executable code to perform the method performed by the foregoing data transmission apparatus.

In addition, an embodiment of this application further provides a computer-readable storage medium. The computer-readable storage medium stores instructions. When the instructions are run on one or more compute devices, the one or more compute devices are caused to perform any method in the data transmission methods in the foregoing embodiments.

In addition, an embodiment of this application further provides a computer program product. When the computer program product is executed by one or more compute devices, the one or more compute devices perform any method in the foregoing data transmission methods. The computer program product may be a software installation package. When any method in the foregoing data transmission methods needs to be used, the computer program product may be downloaded, and the computer program product may be executed on a computer.

In addition, it should be noted that the described apparatus embodiments are merely examples. The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments. In addition, in the accompanying drawings of the apparatus embodiments provided in this application, connection relationships between units indicate that the units have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure for achieving a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technologies may be implemented in a form of a software product. A computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in various embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

A person skilled in the art should be aware that in the foregoing one or more examples, functions described in this application may be implemented by hardware, software, firmware, or any combination thereof. When implemented by software, the functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible to a general-purpose or dedicated computer.

The objectives, technical solutions, and beneficial effects of this application are further described in detail in the foregoing specific implementations. It should be understood that the foregoing descriptions are merely specific implementations of this application.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof. These modifications or replacements do not cause the essence of the corresponding technical solutions to depart from the scope of the technical solutions of embodiments of this application.

## Claims

1. A data transmission method, wherein the method is applied to a sending device in a first data center, and the method comprises:
obtaining data transmission configuration information, wherein the data transmission configuration information comprises a network address of a receiving device and address information of to-be-transmitted data, the address information indicates storage address information of the to-be-transmitted data in a data disk, the data disk is a data disk of the sending device, the to-be-transmitted data is data that needs to be transmitted by the first data center, and the receiving device belongs to a second data center;
reading the to-be-transmitted data from the data disk of the sending device based on the address information; and
sending a first data packet to the receiving device based on the network address of the receiving device, wherein the first data packet is obtained by encapsulating the to-be-transmitted data.

2. The method according to claim 1, wherein the sending device transmits the first data packet to the receiving device by using an unreliable transmission protocol.

3. The method according to claim 1 or 2, wherein a payload of the first data packet comprises first data in the to-be-transmitted data, and a packet header of the first data packet comprises an identifier of a data disk that stores the first data, and an offset of the first data in the data disk that stores the first data.

4. The method according to claim 3, wherein the method further comprises:
obtaining lost data information sent by the receiving device, wherein the lost data information comprises an identifier of a data disk that stores lost data, and an offset of the lost data in the data disk that stores the lost data; and
sending a second data packet to the receiving device, wherein a payload of the second data packet comprises the lost data read from the data disk of the sending device based on the lost data information.

5. The method according to any one of claims 1 to 4, wherein the reading the to-be-transmitted data from the data disk of the sending device based on the address information comprises:
reading the to-be-transmitted data from the data disk of the sending device based on the address information via a data processing unit DPU of the sending device.

6. The method according to any one of claims 1 to 5, wherein the sending the first data packet to the receiving device based on the network address of the receiving device comprises:
sending the first data packet to the receiving device based on the network address of the receiving device through a leased line between the sending device and the receiving device.

7. The method according to any one of claims 1 to 6, wherein the data transmission configuration information further comprises data transmission metadata, the data transmission metadata is used for describing a data transmission requirement, and before the sending the first data packet to the receiving device based on the network address of the receiving device, the method further comprises:
sending the data transmission metadata to the receiving device based on the network address of the receiving device; and
obtaining a negotiation result of the receiving device, and determining, based on the negotiation result, a transmission parameter for sending a data packet.

8. The method according to claim 7, wherein the transmission parameter comprises a maximum transmission unit MTU, and the reading the to-be-transmitted data from the data disk of the sending device based on the address information comprises:
reading a data block from the data disk of the sending device based on the address information, wherein a size of the data block is determined based on the MTU, and the first data packet is obtained by encapsulating the comprised data block.

9. The method according to any one of claims 1 to 8, wherein the storage address information comprises an identifier of the data disk that stores the to-be-transmitted data, and a start address and a length of the to-be-transmitted data stored in the data disk.

10. The method according to any one of claims 1 to 9, wherein the to-be-transmitted data is separately stored in a plurality of data disks of the sending device, and the address information of the to-be-transmitted data comprises an identifier of each data disk comprised in the plurality of data disks, and a start address and a length of to-be-transmitted data stored in each data disk.

11. The method according to any one of claims 1 to 10, wherein the method further comprises:
obtaining the to-be-transmitted data, wherein the to-be-transmitted data is sent by a storage device comprised in the first data center and by one or more sending devices comprised in another data center other than the first data center; and
storing the to-be-transmitted data in the data disk of the sending device.

12. The method according to any one of claims 1 to 11, wherein the method further comprises:
if it is determined that transmission of the to-be-transmitted data ends, deleting the to-be-transmitted data stored in the data disk.

13. The method according to any one of claims 1 to 12, wherein the method further comprises:
obtaining device configuration information, wherein the device configuration information comprises a network address of the sending device, the network address of the receiving device, and a network address of a network device comprised on a path between the sending device and the receiving device; and
maintaining the path between the sending device and the receiving device based on the device configuration information.

14. The method according to any one of claims 1 to 13, wherein there are one or more data transmission paths between the sending device and the receiving device.

15. A data transmission method, wherein the method is applied to a receiving device in a second data center, and the method comprises:
obtaining a first data packet sent by a sending device, wherein a payload of the first data packet comprises first data in to-be-transmitted data, and a packet header of the first data packet comprises an identifier of a data disk that stores the first data, and an offset of the first data; and
storing the first data comprised in the first data packet in a data disk of the receiving device.

16. The method according to claim 15, wherein the storing the first data comprised in the first data table in the data disk of the receiving device comprises:
storing the first data in a storage space indicated by the offset of the first data in the data disk of the receiving device.

17. The method according to claim 15, wherein the method further comprises:
determining lost data information based on the to-be-transmitted data stored in the data disk of the receiving device, wherein the lost data information comprises an identifier of a data disk that is of the sending device and that stores lost data, and an offset of the lost data; and
sending the lost data information to the sending device.

18. The method according to claim 17, wherein the determining the lost data information based on the to-be-transmitted data stored in the data disk of the receiving device comprises:
determining a lost first data packet based on a bitmap, wherein each data bit comprised in the bitmap corresponds to each first data packet, and a value of the data bit indicates whether the first data packet corresponding to the data bit is received; and
determining the lost data information based on the lost first data packet.

19. The method according to any one of claims 15 to 18, wherein before the obtaining the first data packet sent by the sending device, the method further comprises:
obtaining data transmission metadata sent by the sending device, wherein the data transmission metadata is used for describing a data transmission requirement; and
sending a negotiation result to the sending device, wherein the negotiation result indicates that the receiving device satisfies the data transmission requirement.

20. The method according to any one of claims 15 to 19, wherein the method further comprises:
sending the to-be-transmitted data to a storage device comprised in the second data center, and deleting the to-be-transmitted data stored in the data disk of the receiving device.

21. A data transmission apparatus, wherein the apparatus is used in a sending device in a first data center, and the apparatus comprises:
an obtaining module, configured to obtain data transmission configuration information, wherein the data transmission configuration information comprises a network address of a receiving device and address information of to-be-transmitted data, the address information indicates storage address information of the to-be-transmitted data in a data disk, the data disk is a data disk of the sending device, the to-be-transmitted data is data that needs to be transmitted by the first data center, and the receiving device belongs to a second data center;
a reading module, configured to read the to-be-transmitted data from the data disk of the sending device based on the address information; and
a sending module, configured to send a first data packet to the receiving device based on the network address of the receiving device, wherein the first data packet is obtained by encapsulating the to-be-transmitted data.

22. The apparatus according to claim 21, wherein the sending device transmits the first data packet to the receiving device by using an unreliable transmission protocol.

23. The apparatus according to claim 21 or 22, wherein a payload of the first data packet comprises first data in the to-be-transmitted data, and a packet header of the first data packet comprises an identifier of a data disk that stores the first data, and an offset of the first data in the data disk that stores the first data.

24. The apparatus according to claim 23, wherein the obtaining module is further configured to obtain lost data information sent by the receiving device, wherein the lost data information comprises an identifier of a data disk that stores lost data, and an offset of the lost data in the data disk that stores the lost data; and
the sending module is further configured to send a second data packet to the receiving device, wherein a payload of the second data packet comprises the lost data read from the data disk of the sending device based on the lost data information.

25. The apparatus according to any one of claims 21 to 24, wherein the reading module is specifically configured to read the to-be-transmitted data from the data disk of the sending device based on the address information via a data processing unit DPU of the sending device.

26. The apparatus according to any one of claims 21 to 25, wherein the sending module is specifically configured to send the first data packet to the receiving device based on the network address of the receiving device through a leased line between the sending device and the receiving device.

27. The apparatus according to any one of claims 21 to 26, wherein the data transmission configuration information further comprises data transmission metadata, the data transmission metadata is used for describing a data transmission requirement, and before the sending the first data packet to the receiving device based on the network address of the receiving device, the sending module is further configured to send the data transmission metadata to the receiving device based on the network address of the receiving device; and
the receiving module is further configured to: obtain a negotiation result of the receiving device, and determine, based on the negotiation result, a transmission parameter for sending a data packet.

28. The apparatus according to any one of claims 21 to 27, wherein the transmission parameter for the data packet comprises a maximum transmission unitMTU, the reading module is specifically configured to read a data block from the data disk of the sending device based on the address information, the data block comprises the first data, a size of the data block is determined based on the MTU, and the first data packet is obtained by encapsulating the data block comprising the first data.

29. The apparatus according to any one of claims 21 to 28, wherein the obtaining module is configured to obtain device configuration information, wherein the device configuration information comprises a network address of the sending device, the network address of the receiving device, and a network address of a network device comprised on a path between the sending device and the receiving device; and
the apparatus further comprises:
a management module, configured to maintain the path between the sending device and the receiving device based on the device configuration information.

30. A data transmission apparatus, wherein the apparatus is used in a receiving device in a second data center, and the apparatus comprises:
an obtaining module, configured to obtain a first data packet sent by a sending device, wherein a payload of the first data packet comprises first data in to-be-transmitted data, and a packet header of the first data packet comprises an identifier of a data disk that stores the first data, and an offset of the first data; and
a storage module, configured to store the first data comprised in the first data packet in a data disk of the receiving device.

31. The apparatus according to claim 30, wherein the storage module is specifically configured to store the first data in a storage space indicated by the offset of the first data in the data disk of the receiving device.

32. The apparatus according to claim 30 or 31, wherein the apparatus further comprises:
a processing module, configured to determine lost data information based on the to-be-transmitted data stored in the data disk of the receiving device, wherein the lost data information comprises an identifier of a data disk that is of the sending device and that stores lost data, and an offset of the lost data; and
a sending module, configured to send the lost data information to the sending device.

33. The apparatus according to claim 32, wherein the processing module is specifically configured to: determine a lost first data packet based on a bitmap, wherein each data bit comprised in the bitmap corresponds to each first data packet, and a value of the data bit indicates whether the first data packet corresponding to the data bit is received; and determine the lost data information based on the lost first data packet.

34. A system, wherein the system comprises a sending device in a first data center and a receiving device in a second data center, the sending device is configured to perform the method according to any one of claims 1 to 14, and the receiving device is configured to perform the method according to any one of claims 15 to 20.

35. A computer-readable storage medium, wherein the computer-readable storage medium stores instructions, and when the instructions are run on a compute device, the compute device is caused to perform the method according to any one of claims 1 to 14 or the method according to any one of claims 15 to 20.
